# EUROPÄISCHE PATENTANMELDUNG

(11) **EP 3 070 697 A1**
(43) Veröffentlichungstag der Anmeldung: **21.09.2016**
(21) Anmeldenummer: 16160803.9
(22) Anmeldetag: 17.03.2016
(51) Int. Cl.: G08G 1/01, G08G 1/0962, G08G 1/0967

(54) **ANORDNUNG SOWIE VERFAHREN ZUR ÜBERTRAGUNG VERKEHRSBEZOGENER DATEN IM STRASSENVERKEHR**

(30) Priorität: 20.03.2015 DE 102015205050
(71) Anmelder: Ford Global Technologies, LLC, Dearborn, MI 48126 (US)
(72) Erfinder: Gussen, Uwe, 52393 Hürtgenwald (DE); Arndt, Christoph, 57583 Mörlen (DE); Stefan, Frederic, 52072 Aachen (DE); Petri, Frank, 50374 Erftstadt (DE)
(74) Vertreter: Dörfler, Thomas

(57) **Zusammenfassung**

Die Erfindung betrifft eine Anordnung sowie ein Verfahren zur Übertragung verkehrsbezogener Daten im Straßenverkehr, wobei die verkehrsbezogenen Daten in Form dynamisch erzeugter QR-Codes von einer Sende- oder Anzeigeeinrichtung an eine auf Seiten wenigstens eines Fahrzeugs vorhandene, mobile Einheit übertragbar sind, und wobei die auf Seiten des Fahrzeugs (100) vorhandene, mobile Einheit ebenfalls zur Übertragung dynamisch erzeugter QR-Codes ausgestaltet ist.

## Beschreibung

Die Erfindung betrifft eine Anordnung sowie ein Verfahren zur Übertragung verkehrsbezogener Daten im Straßenverkehr. Insbesondere betrifft die Erfindung eine Anordnung und ein Verfahren, bei denen dynamisch erzeugte QR-Codes zur Datenübertragung in Situationen verwendet werden, in denen die normalen Datenübertragungskanäle überlastet sind oder nicht ordnungsgemäß funktionieren.

Ein bei der Datenübertragung insbesondere im Kraftfahrzeugverkehr mitunter auftretendes Problem ist, dass das herkömmliche Standard-Mobilfunknetz (GSM) überlastet ist und/oder nicht ordnungsgemäß arbeitet. Ferner können auch weitere herkömmliche Informationskanäle gestört sein, wobei z.B. der Radioempfang unterbrochen sein kann oder die Übertragung von Verkehrsdaten nicht hinreichend genau bzw. "feinmaschig" erfolgt, wie dies für die ordnungsgemäße Informationsübermittlung und gegebenenfalls für die rechtzeitige Aussendung von Warnsignalen erforderlich ist.

Des Weiteren können auch Latenz- bzw. Wartezeiten bei dem Empfang und der Weiterverteilung der verkehrsbezogenen Daten einen ordnungsgemäßen und rechtzeitigen Datenaustausch behindern.

Aus US 8,427,341 B2 sind u.a. eine Vorrichtung und ein Verfahren bekannt, welche dazu dienen, den Fahrer eines Fahrzeuges im Voraus mit Streckeninformationen zu versorgen. Dabei können die jeweiligen Informationen kodiert sein, wobei das betreffende Fahrzeug mit wenigstens einem Sensor zum Erfassen bzw. Lesen der Informationen sowie einer an den Sensor gekoppelten Vorrichtung zur Verarbeitung der jeweiligen Information und zur Bereitstellung dieser Information für den Fahrer ausgerüstet ist.

Aus JPH06197246 ist u.a. eine im Bereich des Rückspiegels eines Fahrzeuges montierbare Leseeinheit zum Einlesen von auf einer Straßenanzeigetafel angezeigten kodierten Informationen, welche beispielsweise eine auf einer Temperaturmessung basierenden Warnung vor vereister Fahrbahn beinhalten können, bekannt.

Es ist eine Aufgabe der vorliegenden Erfindung, eine Anordnung sowie ein Verfahren zur Übertragung verkehrsbezogener Daten im Straßenverkehr bereitzustellen, welche eine zuverlässigere Informationsübermittlung und ggf. rechtzeitige Übermittlung von Warnsignalen ermöglichen.

Diese Aufgabe wird durch die Anordnung gemäß den Merkmalen des unabhängigen Anspruchs 1 bzw. das Verfahren gemäß den Merkmalen des unabhängigen Anspruchs 8 gelöst.

Bei einer erfindungsgemäßen Anordnung zur Übertragung verkehrsbezogener Daten im Straßenverkehr sind die verkehrsbezogenen Daten in Form dynamisch erzeugter QR-Codes von einer Sende- oder Anzeigeeinrichtung an jeweils eine auf Seiten wenigstens eines Fahrzeugs vorhandene, mobile Einheit übertragbar.

Die erfindungsgemäße Anordnung ist dadurch gekennzeichnet, dass die auf Seiten des Fahrzeugs vorhandene, mobile Einheit ebenfalls zur Übertragung dynamisch erzeugter QR-Codes ausgestaltet ist.

Im Sinne der vorliegenden Anmeldung wird unter der "dynamischen Erzeugung" eines QR-Codes die Erzeugung eines QR-Musters in Abhängigkeit von einer aktuellen Nachricht oder Information verstanden, wobei solche dynamischen QR-Codes sich prinzipiell von herkömmlichen QR-Codes, die mittels einer "App" oder einem Smartphone lesbar sind, unterscheiden.

Des Weiteren wird im Sinne der vorliegenden Anmeldung unter der "Übertragung" dynamisch erzeugter QR-Codes u.a. auch die optische Übertragung durch Anzeige der QR-Codes auf einer Anzeigefläche oder dergleichen verstanden.

Die vorliegende Erfindung beinhaltet zunächst insbesondere das Konzept, dynamische QR-Codes einzusetzen, um die vorstehend beschriebenen Probleme abzumildern bzw. zu beseitigen. Gemäß der Erfindung werden somit QR-Symbole bzw. QR-Codes an ein Fahrzeug ausgesendet, wobei diese QR-Codes dynamisch erzeugt werden. Dabei kann insbesondere eine Anzeige der dynamisch erzeugten QR-Codes an Verkehrszeichen-Brücken, an digitalen Verkehrsschildern oder dergleichen zur Erkennung durch ein Fahrzeug erfolgen.

Dabei ist die erfindungsgemäße Informationsübertragung über dynamisch erzeugte QR-Codes in Form einer bidirektionalen Kommunikation bzw. eines bidirektionalen Datenaustauschs realisiert, wobei die entsprechende Informationsübermittlung bzw. Datenübertragung sowohl von der jeweiligen Verkehrsinfrastruktur-Einrichtung (z.B. einer Verkehrszeichen-Brücke) zu dem jeweiligen Fahrzeug als auch in umgekehrter Richtung (d.h. von dem jeweiligen Fahrzeug zur Verkehrsinfrastruktur-Einrichtung) erfolgen kann. Des Weiteren kann in Ausführungsformen der Erfindung eine bidirektionale Kommunikation auch zwischen dem jeweiligen Fahrzeug und wenigstens einem weiteren Fahrzeug, welches in entsprechender Weise sowohl zum Erfassen bzw. Einlesen als auch zur Übertragung bzw. Anzeige von dynamisch erzeugten QR-Codes ausgerüstet ist, erfolgen.

Im Ergebnis kann so auch z.B. bei Störungen oder Überlastungen des Mobilfunknetzes eine ordnungsgemäße Informationsübermittlung und ggf. rechtzeitige Übermittlung von Warnsignalen etc. gewährleistet werden.

Bei den im Rahmen der Erfindung übertragenen Informationen kann es sich insbesondere um Verkehrsinformationen wie z.B. Informationen über Verkehrsbehinderungen, Baustellen, Verkehrsumleitungen, Sturmwarnungen oder allgemeine Informationen bzw. Aufforderungen handeln. Die Datenübertragung solcher dynamischer QR-Codes kann von Verkehrszeichen-Brücken, digitalen Verkehrszeichen oder auch als Ausdruck in einem Baustellenbereich erfolgen.

Gemäß einer Ausführungsform ist die Sende- oder Anzeigeeinrichtung an einer Verkehrsinfrastruktur-Einrichtung, insbesondere einem digitalen Verkehrszeichen, einer Verkehrszeichen-Brücke oder dergleichen, angeordnet.

Gemäß einer Ausführungsform ist die Anordnung zum bidirektionalen Austausch verkehrsbezogener Daten zwischen der Sende- oder Anzeigeeinrichtung und der auf Seiten des Fahrzeugs vorhandenen, mobilen Einheit ausgestaltet.

Gemäß einer Ausführungsform weist die auf Seiten des Fahrzeugs vorhandene, mobile Einheit eine Kamera zur optischen Erfassung der QR-Codes auf. Moderne Fahrzeuge sind z.B. häufig mit einer Frontkamera zur Verkehrszeichenerkennung, Straßenabtastung etc. versehen, so dass insbesondere eine solche bereits vorhandene Frontkamera zum Lesen der dynamisch erzeugten QR-Codes mit der zugehörigen Information verwendet werden kann. Wenn das jeweilige Fahrzeug nicht mit einer Frontkamera ausgestattet ist, kann das Erkennen bzw. Lesen des dynamischen QR-Codes auch z.B. mit einem an der Windschutzscheibe montierten Smartphone erfolgen.

Die betreffenden Informationen können im Fahrzeug unmittelbar angezeigt werden oder über eine automatische Sprachausgabe ausgegeben werden.

Gemäß einer Ausführungsform weist die auf Seiten des Fahrzeugs vorhandene, mobile Einheit eine mobile Kommunikationseinrichtung, insbesondere ein Smartphone oder einen Tablet-Computer, auf.

Gemäß einer Ausführungsform weist die auf Seiten des Fahrzeugs vorhandene, mobile Einheit wenigstens eine Anzeige zur visuellen Darstellung der erzeugten QR-Codes auf. Insbesondere kann die von dem Fahrzeug ausgehende Datenübertragung z.B. mittels organischer Leuchtdioden (OLED) an der Windschutzscheibe oder Heckscheibe des betreffenden Fahrzeuges realisiert werden.

In weiteren Ausführungsformen können auch eine Cloud-gestützte Datenübertragung sowie entsprechende Speichercluster für die dynamisch erzeugten QR-Codes verwendet werden, um die Möglichkeiten und Kapazitäten zur Übermittlung von Warnsignalen und für den Datenaustausch zu verbessern.

Gemäß einer Ausführungsform weist die Anordnung somit ferner einen virtuellen Speicher (Cloud) zur Speicherung von auf die QR-Codes bezogenen Daten auf.

Die Erfindung betrifft weiter ein Verfahren zur Übertragung verkehrsbezogener Daten im Straßenverkehr, wobei die verkehrsbezogenen Daten in Form dynamisch erzeugter QR-Codes von einer Sende- oder Anzeigeeinrichtung an jeweils eine auf Seiten wenigstens eines Fahrzeugs vorhandene, mobile Einheit übertragen werden, wobei die auf Seiten des Fahrzeugs vorhandene, mobile Einheit ebenfalls dynamisch erzeugte QR-Codes überträgt.

Gemäß einer Ausführungsform erfolgt die Übertragung der dynamisch erzeugten QR-Codes von der auf Seiten des Fahrzeugs vorhandenen, mobilen Einheit zurück an eine die Sende- oder Anzeigeeinrichtung aufweisende Verkehrsinfrastruktur-Einrichtung.

Gemäß einer Ausführungsform erfolgt die Übertragung der dynamisch erzeugten QR-Codes von der auf Seiten des Fahrzeugs vorhandenen, mobilen Einheit an ein weiteres, mit einer Erfassungseinrichtung zum Lesen der QR-Codes ausgestattetes Fahrzeug.

Weitere Ausgestaltungen der Erfindung sind der Beschreibung sowie den Unteransprüchen zu entnehmen.

Die Erfindung wird nachstehend anhand eines in den beigefügten Abbildungen dargestellten Ausführungsbeispiels näher erläutert.

Es zeigen:
- Figur 1: eine schematische Darstellung zur Erläuterung wesentlicher Komponenten eines erfindungsgemäß ausgestatteten Fahrzeuges anhand einer beispielhaften Ausführungsform der Erfindung;
- Figur 2: eine schematische Darstellung zur Veranschaulichung der zwischen einer vorhandenen Verkehrsinfrastruktur-Einrichtung in Form einer Verkehrszeichenbrücke und einem erfindungsgemäß ausgestatteten Fahrzeug stattfindenden bidirektionalen Kommunikation; und
- Figur 3: ein Blockdiagramm zur Erläuterung der in einer erfindungsgemäßen Vorrichtung gemäß einer Ausführungsform vorhandenen Komponenten.

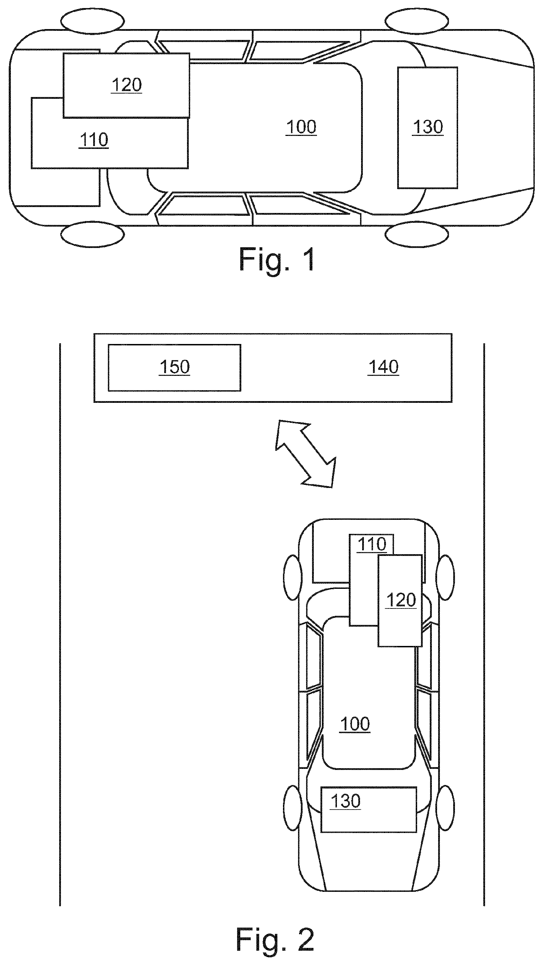

Gemäß Fig. 1 weist ein gemäß der vorliegenden Erfindung ausgerüstetes Fahrzeug 100 eine Frontkamera 110 sowie eine Anzeige 120 auf, welche im Ausführungsbeispiel als organische Leuchtdioden-Anzeige (OLED) realisiert und zur Anzeige von QR-Codes ausgestaltet ist. Mit "130" ist eine weitere Anzeige (ebenfalls in Form einer OLED-Anzeige und zur Darstellung von QR-Codes) bezeichnet.

Gemäß Fig. 2 ist lediglich schematisch dargestellt, wie das Fahrzeug 100 eine vorhandene Verkehrsinfrastruktur-Einrichtung 140 in Form einer Verkehrszeichenbrücke passiert, wobei diese Verkehrsinfrastruktur-Einrichtung 140 ebenfalls eine Anzeige 150 aufweist, welche die Darstellung von QR-Codes ermöglicht.

Die im Rahmen der Erfindung angezeigten QR-Codes werden dynamisch auf Basis einer aktuellen Nachricht oder Information erzeugt und können in dem in Fig. 2 gezeigten Szenario sowohl von der Verkehrsinfrastruktur-Einrichtung 140 bzw. der dort vorhandenen Anzeige 150 zu dem Fahrzeug 100 übertragen werden (wo die QR-Codes mit der Frontkamera 110 oder auch unter Verwendung eines z.B. an der Windschutzscheibe montierten Smartphones erfasst und gelesen werden) als auch in umgekehrter Richtung von dem Fahrzeug 100 zu der Verkehrsinfrastruktur-Einrichtung 140), wobei in letzterem Falle die Darstellung der zu übertragenden QR-Codes auf der Anzeige 120 auf Seiten des Fahrzeuges 100 zur Übermittlung an die bzw. Erfassung durch die Anzeige 150 der Verkehrsinfrastruktur-Einrichtung 140 erfolgt.

Generell kann der Datenfluss von dem jeweiligen Fahrzeug 100 zu der Verkehrsinfrastruktur-Einrichtung 140 über eine Anzeige (z.B. OLED-Anzeige) erfolgen, welche beispielsweise an der Windschutzscheibe oder einem Seitenfenster des Fahrzeuges 100 fixiert ist. Mittels eines solchen Systems kann dann die Datenübertragung von der Fahrzeugumgebung oder einer Mobilvorrichtung des Fahrers an die Verkehrsinfrastruktur-Einrichtung erfolgen. Des Weiteren kann bei der Informationsübermittlung vom Fahrzeug 100 an die Verkehrsinfrastruktur-Einrichtung 140 die Übertragung der dynamisch erzeugten QR-Codes auch unter Verwendung einer mobilen Kommunikationseinrichtung wie z.B. eines Smartphones oder Tablet-Computers erfolgen.

In weiteren Ausführungsformen der Erfindung kann eine bidirektionale Übertragung dynamisch erzeugter QR-Codes, wie sie vorstehend anhand von Fig. 1 und 2 zwischen einem Fahrzeug und einer vorhandenen Verkehrsinfrastruktur-Einrichtung beschrieben wurde, auch zwischen jeweils zwei Fahrzeugen untereinander erfolgen, wobei dann jeweils beide Fahrzeuge mit einer Kamera bzw. Leseeinrichtung zur Erfassung der übertragenen QR-Codes als auch einer Anzeige oder anderen geeigneten Einrichtung (wie Mobiltelefon oder Tablet-Computer) zur Darstellung bzw. Übertragung der jeweiligen QR-Codes ausgestattet sind. Auf diese Weise kann die ordnungsgemäße und rechtzeitige Übermittlung von Verkehrsinformationen sowie erforderlichenfalls die Aussendung entsprechender Warnsignale zusätzlich unterstützt werden.

In weiteren Ausführungsformen kann auch ein virtueller Speicher in Form einer Cloud als Speichercluster für Informationen im Zusammenhang mit der erfindungsgemäßen Informationsübermittlung über dynamisch erzeugte QR-Codes verwendet werden.

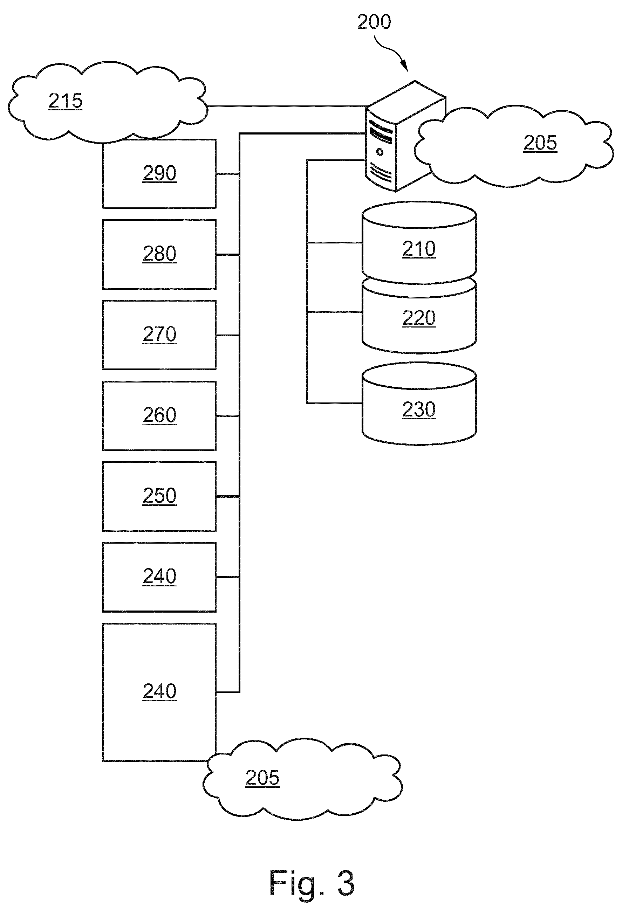

In der lediglich schematischen Darstellung von Fig. 3 ist ein solcher virtueller Speicher mit "215" bezeichnet, wobei auf Seiten des Fahrzeugs 100 eine entsprechende Cloud-Unterstützung 205 vorgesehen ist. Bei den gespeicherten Datenbanken handelt es sich im Ausführungsbeispiel um eine Datenbank 210 für die zu übertragenden QR-Codes, eine Datenbank 220 für die HMI-Unterstützung und eine Datenbank 230 für die bidirektionale Kommunikation. Weitere, gemäß Fig. 3 auf Seiten des Fahrzeugs 100 vorgesehene Komponenten sind eine Anzeige-Datenanschluss 240 zur Verwendung der Anzeige als Sendeeinrichtung für die dynamisch erzeugten QR-Codes, ein Smartphone-Datenanschluss 250 zur Verwendung eines Smartphones als Sendeeinrichtung für die dynamisch erzeugten QR-Codes, eine Einheit 260 zur Datenverknüpfung der Eingangsdaten eines Smartphones, eine Einheit 270 zur Datenverknüpfung der Eingangsdaten der Frontkamera, eine Einheit 280 zur Datenverknüpfung von Fahrzeugeingangsdaten, sowie ein "Broadcasting Agent" 290. Die Eingangsdaten selbst (z.B. Informationen über Verkehrsbehinderungen, Baustellen, Verkehrsumleitungen, Sturmwarnungen oder allgemeine Informationen bzw. Aufforderungen) sind mit "240" bezeichnet.

## Patentansprüche

1. Anordnung zur Übertragung verkehrsbezogener Daten im Straßenverkehr, wobei die verkehrsbezogenen Daten in Form dynamisch erzeugter QR-Codes von einer Sende- oder Anzeigeeinrichtung an eine auf Seiten wenigstens eines Fahrzeugs vorhandene, mobile Einheit übertragbar sind,
**dadurch gekennzeichnet, dass**
die auf Seiten des Fahrzeugs (100) vorhandene, mobile Einheit ebenfalls zur Übertragung dynamisch erzeugter QR-Codes ausgestaltet ist.

2. Anordnung nach Anspruch 1, **dadurch gekennzeichnet, dass**
die Sende- oder Anzeigeeinrichtung (150) an einer Verkehrsinfrastruktur-Einrichtung (140), insbesondere einem digitalen Verkehrszeichen, einer Verkehrszeichen-Brücke oder dergleichen, angeordnet ist.

3. Anordnung nach Anspruch 1 oder 2, **dadurch gekennzeichnet, dass** diese zum bidirektionalen Austausch verkehrsbezogener Daten zwischen der Sende- oder Anzeigeeinrichtung (150) und der auf Seiten des Fahrzeugs (100) vorhandenen, mobilen Einheit ausgestaltet ist.

4. Anordnung nach einem der Ansprüche 1 bis 3,
**dadurch gekennzeichnet, dass**
die auf Seiten des Fahrzeugs (100) vorhandene, mobile Einheit eine Kamera (110) zur optischen Erfassung der QR-Codes aufweist.

5. Anordnung nach einem der vorhergehenden Ansprüche,
**dadurch gekennzeichnet, dass**
die auf Seiten des Fahrzeugs (100) vorhandene, mobile Einheit eine mobile Kommunikationseinrichtung, insbesondere ein Smartphone oder einen Tablet-Computer, aufweist.

6. Anordnung nach einem der vorhergehenden Ansprüche,
**dadurch gekennzeichnet, dass**
die auf Seiten des Fahrzeugs (100) vorhandene, mobile Einheit wenigstens eine Anzeige (120, 130) zur visuellen Darstellung dynamisch erzeugter QR-Codes aufweist.

7. Anordnung nach einem der vorhergehenden Ansprüche,
**dadurch gekennzeichnet, dass**
diese ferner einen virtuellen Speicher (Cloud) (215) zur Speicherung von auf die dynamisch erzeugten QR-Codes bezogenen Daten aufweist.

8. Verfahren zur Übertragung verkehrsbezogener Daten im Straßenverkehr, wobei die verkehrsbezogenen Daten in Form dynamisch erzeugter QR-Codes von einer Sende- oder Anzeigeeinrichtung an eine auf Seiten wenigstens eines Fahrzeugs vorhandene, mobile Einheit übertragen werden,
**dadurch gekennzeichnet, dass**
die auf Seiten des Fahrzeugs (100) vorhandene, mobile Einheit ebenfalls dynamisch erzeugte QR-Codes überträgt.

9. Verfahren nach Anspruch 8, **dadurch gekennzeichnet, dass**
die Übertragung der dynamisch erzeugten QR-Codes von der auf Seiten des Fahrzeugs (100) vorhandenen, mobilen Einheit zurück an eine die Sende- oder Anzeigeeinrichtung (150) aufweisende Verkehrsinfrastruktur-Einrichtung (140) erfolgt.

10. Verfahren nach Anspruch 8 oder 9, **dadurch gekennzeichnet, dass**
die Übertragung der dynamisch erzeugten QR-Codes von der auf Seiten des Fahrzeugs (100) vorhandenen, mobilen Einheit an ein weiteres, mit einer Erfassungseinrichtung zum Lesen der QR-Codes ausgestattetes Fahrzeug erfolgt.
